(19) Europäisches Patentamt
European Patent Office
Office européen des brevets

(11) Publication number: 0 400 844 A1

(12) # EUROPEAN PATENT APPLICATION

(21) Application number: 90305374.2

(51) Int. Cl.[5]: C08F 8/34

(22) Date of filing: 17.05.90

(30) Priority: 31.05.89 FR 8907419

(43) Date of publication of application:
05.12.90 Bulletin 90/49

(84) Designated Contracting States:
AT BE CH DE DK ES GB GR IT LI LU NL SE

(71) Applicant: BP Chemicals Limited
Belgrave House 76 Buckingham Palace Road
London, SW1W 0SU(GB)

(72) Inventor: Blackborow, Richard, c/o BP Chimie S.A.
Centre de Recherches, Service Propriété Ind.
BP No. 6, F-13117 Lavera(FR)
Inventor: Boileau, Sylvie
38 Rue des Cordelières
F-75013 Paris(FR)
Inventor: Mazeaud, Brigitte
11 rue Monge
F-75005 Paris(FR)

(74) Representative: Denbigh, Keith Warwick et al
BP INTERNATIONAL LIMITED Patents Division Chertsey Road
Sunbury-on-Thames Middlesex, TW16 7LN(GB)

(54) **Process for the manufacture of new polymers containing chains derived from a polybutene.**

(57) The present invention relates to a process for manufacturing polymers containing chains derived from a polybutene by an addition reaction between a polythiol and a liquid polybutene containing one carbon-carbon double bond per molecule, in conditions which allow the fomation of free radicals. It also relates to the polymers thus prepared, containing (a) at least one thioether function and (b) at least one thiol function or another thioether function, each of the sulphur atoms of the thioether functions being bonded to one radical derived from a liquid polybutene, or containing (a) at least two thioether functions wherein each sulphur atom is bonded to one radical derived from a liquid polybutene and (b) at least two other thioether functions or a disulphide bond. These polymers, eventually in a cross-linked form may be used in caulking products, in mastics or in materials for filling cables.

EP 0 400 844 A1

# PROCESS FOR THE MANUFACTURE OF NEW POLYMERS CONTAINING CHAINS DERIVED FROM A POLYBUTENE

The present invention relates to a process for the manufacture of new polymers having a high molecular weight and containing chains derived from a polybutene. The new polymers obtained are, in particular, intended to be used for the manufacture of caulking products and mastics.

In the field of caulking products and mastics, there is a significant demand for polymers having a high molecular weight, very low permeability to water and gases and a good resistance to ageing and oxidation, as well as satisfactory dielectric properties; these polymers being, in addition, cheap and easily obtained.

In French Patent 1551894 there was proposed a preparation of a polymer having a high molecular weight by reaction between a polymer of the elastomeric type having a carbon-carbon double bond, an alkylhypohalite and a compound containing phosphorous, sulphur or arsenic, in particular a compound containing one or two thiol functions. The major disadvantage of this preparation is that it uses an alkylhypohalite, which is a halogenating agent and which is converted into a co-product. It is necessary, in addition, to separate this co-product from the manufactured polymer. On the other hand, this preparation forms a polymer which has a very individual structure and which cannot be used at high temperature, because of the fact that it contains the halide of the alkylhypohalite. In addition, this preparation is difficult to carry out because of the fact that it uses a polymer of the elastomeric type which is generally in the form of a solid.

Thus, an urgent need has appeared to develop a process for the preparation of polymers of high molecular weight using a liquid polymer possessing a carbon-carbon double bond, without the aid of a halogenating agent.

The subject of the present invention is therefore a process for the manufacture of a polymer containing chains derived from a polybutene, characterised in that an addition reaction is carried out, in conditions which allow the production of free radicals, between a polythiol and a liquid polybutene containing one carbon-carbon double bond per molecule.

The polybutene used in the process is a liquid polybutene which can be prepared by polymerisation of one or more olefins containing four carbon atoms. In particular, it can be prepared by polymerisation or copolymerisation of 1-butene and the cis- and trans- 2-butenes, in particular using a catalyst of the cationic type. The best results are obtained when a polybutene is used which is prepared by polymerisation of isobutene, or by copolymerisation of isobutene with 1-butene and/or 2-butenes, using a catalyst of the cationic type, in particular of the Friedel-Crafts type, such as aluminium trichloride, boron trifluoride or tin tetrachloride or titanium tetrachloride, or a chlorinated organoaluminium derivative, optionally in the presence of a cocatalyst such as hydrochloric acid, tert-butyl chloride or water. The polybutene can advantageously be prepared by copolymerisation of a mixture containing from 30 to 90% by weight of isobutene and from 10 to 70% by weight of 1-butene and 2-butenes. However, it is preferred to use a liquid polybutene prepared according to European Patent Application 0145235. More particularly, the liquid polybutene is prepared in the presence of a catalyst consisting of a complex of boron trifluoride and an alcohol. The polymerisation may be carried out in a liquid phase at a temperature from -100 to +50°C, with a residence time of at least 8 minutes about.

The polybutene used in the present invention contains one carbon-carbon double bond per molecule, generally placed at the end of the chain. The carbon-carbon double bond is essentially of the vinylidene type, according to formula:

$$-CH_2-\underset{}{\overset{CH_3}{\overset{|}{C}}}=CH_2$$

The carbon-carbon double bonds which the polybutene used in the present invention contains, can be advantageously from 1 to 90%, preferably from 40 to 85% and more especially from 50 to 80%, or from 60 to 90% of the vinylidene type, while the other carbon-carbon double bonds can be either of a trisubstituted type according to formulae:

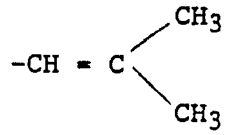

or

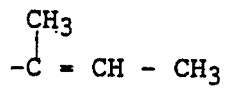

or tetrasubstituted type according to formula:

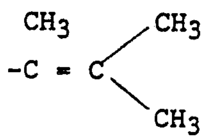

Thus, the preferred polybutene used in the present invention contains per molecule from 0.01 to 0.9, preferably from 0.4 to 0.85 and more especially from 0.5 to 0.8 or from 0.6 to 0.9 carbon-carbon double bond of the vinylidene type.

The polybutene which is suitable for the present invention may have a mean molecular weight by number measured by osmometry or by gel permeation chromatography, ranging from 200 to 10,000, preferably ranging from 330 to 5,000, and more particularly ranging from 400 to 2,500. The use of a polybutene of too low a weight can lead to an addition product of relatively high volatility, while a polybutene of too high a weight can lead to an addition reaction with a low yield.

Thus, the polybutene used can contain, per molecule on average, from 4 to 180, preferably from 6 to 90 and more particularly from 7 to 45 units derived from olefin. It can consequently contain, per molecule, from 16 to 720 cabon atoms, preferably from 24 to 360 carbon atoms and more particularly from 28 to 180 carbon atoms.

The polybutene can also have a viscosity at 100 °C ranging from 0.002 to 100 poiseuilles, preferably from 0.01 to 20 poiseuilles and more particularly from 0.05 to 5 poiseuilles.

In addition, the polybutene can have a relatively narrow distribution of its molecular weights, calculated by the ratio of the mean molecular weight by weight, Mw, to the mean molecular weight by number, Mn, of the polymer. This distribution may be between 1 and 5, preferably between 1 and 3.

A polybutene sold by BP Chemicals (Great Britain) under the commercial name "Ultravis" (Registered Trademark) can be used, for example.

The polythiol used during the addition reaction is an organic compound containing at least two thiol functions. It can have a low molecular weight and be chosen from 1,2-dimercaptoethane, 2,3-dimercapto-1-propanol, 1,4-dimercapto-2,3-butanediol, di(2-mercaptoethyl)ether, 1,2-dimercaptobenzene and 1,3-dimercaptobenzene. It can also be chosen from the organic polymers having at least two thiol functions, such as a polymercaptopropylmethyl-siloxane, a 1-vinyl-4-mercaptobenzene polymer, a cysteine based polypeptide or even a cellulose or a polyacrylamide which are substituted by radicals of formula $-CO(CH_2)_4CHSH-CH_2-CH_2-SH$.

According to the invention the new polymer is obtained by an addition reaction between the liquid polybutene and polythiol, in conditions which allow the production of free radicals, in particular in the presence of free radical generators or ultraviolet radiation. The invention is based on the somewhat astonishing discovery that in these conditions it is as easy to make a polybutene of relatively high mean molecular weight by numbers containing one carbon-carbon double bond per molecule reacting with a polythiol as it is an olefin of low molecular weight with an organic compound containing a single thiol function.

In addition, unlike olefins which generally have a linear structure, polybutene is characterised by a relatively branched structure, since it contains, per monomer unit, one or two ethyl or methyl side chains. It is noted with surprise that in the conditions of the addition reaction of the present invention, the relatively branched structure of the polybutene does not cause the formation of numerous by-products by secondary reactions of the radicals.

Free radical generators are well known, and as examples there may be mentioned peroxides, such as dibenzoyl peroxide, dicyclohexylperoxydicarbonate, tert-butyl perbenzoate, lauryl peroxide, isobutyryl peroxide, tert-butylperoxyacetate and dicumyl peroxide, or compounds containing an azo function, such as azo-bis-isobutyronitrile, or oxygen, or a mixture of these products. Photochemical techniques using ultraviolet rays or natural light can also be used, optionally in the presence of air or oxygen. The choice between the photochemical technique and the use of free radical generators depends on the nature of the reagents used, in particular on the nature of the polythiol.

A factor in the process for preparing the new polymer is the choice of medium in which the addition reaction takes place. Astonishingly, the addition reaction can be carried out without a solvent, that is to say in bulk, in liquid polybutene, and preferably with stirring. In spite of the relatively high viscosity of the medium, it is noted that the addition reaction takes place with a satisfactory yield. The choice of medium in which the addition reaction takes place depends on the nature of the liquid polybutene and of the polythiol. In certain cases the addition reaction can be carried out in a solvent which is appropriate for reducing the viscosity of the reaction medium and for increasing the activity of the polythiol. The solvent used can be chosen from the saturated hydrocarbons, the aromatic hydrocarbons or the halogenated hydrocarbons. For example, toluene, 1,2-dichloroethane or dichloromethane can be used.

The temperature at which the polythiol most easily adds to the liquid polybutene depends on the nature of the reagents, the choice of the free radical generators or of the photochemical technique used and the medium in which the reaction takes place. It is generally between -20 °C and +200 °C, and preferably between 0 °C and 100 °C. When the addition reaction takes place in the presence of a free radical generator, the reaction temperature is, in particular, linked to the decomposition temperature of this generator.

During the addition reaction, the thiol functions of the polythiol are totally or partially etherified by the polybutene to form thioether functions. In practice, the level of etherification of the thiol functions is at least 20%, preferably at least 50% and more particularly at least 80%. It is partly determined by the ratio of the quantitites of polybutene and polythiol used. In general the addition reaction is carried out with quantities of polythiol and polybutene which are such that the molar ratio between the thiol functions and the polybutene is approximately in the neighbourhood of 1. It is also possible to carry out the addition reaction with a molar excess of thiol functions or of polybutene.

The new polymer manufactured by the addition reaction is an organic polymer containing, on the one hand, at least one thioether function, and on the other hand at least one thiol function or another thioether function, each of the sulphur atoms of the thioether functions being bonded to one radical derived from a liquid polybutene which may have a mean molecular weight by number of about 200 to 10,000, preferably of 330 to 5,000.

When the new polymer manufactured according to the present invention possesses one or more thiol functions which are not etherified by the liquid polybutene, the polymer can advantageously be converted by a crosslinking reaction, in particular with a view to increasing the molecular weight of the final product. The crosslinking reaction is carried out after the addition reaction, and consists in linking at least two molecules of the new polymer together. This crosslinking reaction can consist, in particular, in forming intermolecular disulphide bonds by an oxidation reaction between two thiol functions. It can also be carried out by the reaction of the new polymer with an organic compound containing at least two carbon-carbon double bonds, such as butadiene, isoprene or cyclotetramethylvinylsiloxane. The new polymer which is thus crosslinked is generally an organic polymer containing on the one hand at least two thioether functions in which each sulphur atom is bonded to one radical derived from a liquid polybutene which may have a mean molecular weight by number of about 200 to 10,000, preferably from 330 to 5,000, and on the other hand at least two other thioether functions or a disulphide bond.

The new polymer manufactured by the process of the present invention, optionally converted by crosslinking, is in the form of a viscous liquid, a gel or a solid having elastic properties. It is impermeable to liquids, in particular to water, and to gases, and possesses good resistance to ageing and to the phenomena of oxidation. It can be used in caulking products or in mastics. It can also be used as a material for filling electric or telephone cables which are gas-tight and water-tight.

The following example illustrates the present invention.

Example

Into a 50 ml quartz flask are introduced, with stirring and under an atmosphere of ambient air, 6.344g of "Ultravis 10" (Registered Trademark) polybutene sold by BP Chemicals (Great Britain) having a mean molecular weight by number of about 1,000 and one carbon-carbon double bond per molecule, about 78% of which are of the vinylidene type, 0.7983g of polymercaptopropylmethylsiloxane sold by Petrarch (United

States) under reference PS 927, having a mean molecular weight by number of about 9100 and possessing 68 thiol functions per molecule, and 8 ml of toluene, which is used as solvent. The mixture thus obtained is subjected at ambient temperature to irradiation by ultraviolet radiation. At the end of 19 hours of irradiation the solvent used is removed by evaporation and a polymer is obtained in the form of a very viscous transparent liquid of a yellow colour. This polymer is analysed by nuclear magnetic resonance and the disappearance of 54% of the thiol function from the polymercaptopropylmethyl-siloxane is noted. It is also analysed by gel permeation chromatography, and it is noted that it has a mean molecular weight by number of 37,000.

## Claims

1. Process for the manufacture of polymer containing chains derived from a polybutene, characterised in that an addition reaction is carried out, in conditions which allow the production of free radicals, between a polythiol and a liquid polybutene containing one carbon-carbon double bond per molecule.

2. Process according to Claim 1, characterised in that the polybutene is a polymer of 1-butene, the 2-butenes or isobutene, or a copolymer of 1-butene with the 2-butenes, or a copolymer of isobutene with 1-butene and/or the 2-butenes, which are prepared using a cationic or Friedel-Crafts type catalyst.

3. Process according to Claim 1, characterised in that the polybutene has a mean molecular weight by number ranging from 200 to 10,000.

4. Process according to claim 1, characterised in that the polythiol is chosen from 1,2-dimercaptoethane, 2,3-dimercapto-1-propanol, 1,4-dimercapto-2,3-butanediol, di(2-mercaptoethyl)ether, 1,2-dimercaptobenzene, 1,3-dimercaptobenzene, a polymercaptopropylmethylsiloxane, a 1-vinyl-4-mercaptobenzene polymer, a cysteine-based polypeptide or a cellulose or a polyacrylamide which are substituted by radicals of formula $-CO(CH_2)_4CH\ SH-CH_2-CH_2-SH$.

5. Process according to Claim 1, characterised in that the addition reaction is carried out in the presence of free radical generators, or according to a photochemical technique using ultraviolet rays or natural light, optionally in the presence of air or oxygen.

6. Process according to Claim 1, characterised in that the addition reaction is followed by a crosslinking reaction of the manufactured polymer.

7. Process according to Claim 6, characterised in that the crosslinking reaction of the manufactured polymer consists in forming intermolecular disulphide bonds by an oxidation reaction between two thiol functions, or in reacting the manufactured polymer with an organic compound containing at least two carbon-carbon double bonds.

8. Organic polymer containing, one the one hand, at least one thioether function, and on the other hand at least one thiol function or another thioether function, each of the sulphur atoms of the thioether functions being bonded to one radical derived from a polybutene having a mean molecular weight by number of about 200 to 10,000.

9. Organic polymer obtained by a crosslinking reaction of the polymer according to Claim 8.

10. Organic polymer containing on the one hand at least two thioether functions in which each sulphur atom is bonded to one radical derived from a polybutene having a mean molecular weight by number of about 200 to 10,000, and containing on the other hand at least two other thioether functions or a disulphide bond.

11. Use of the polymers according to any one of Claims 8 to 10 in caulking products, in mastics or in materials for filling cables.

European Patent Office

# EUROPEAN SEARCH REPORT

Application Number

EP 90 30 5374

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| A | FR-A-2 250 771 (PRODUCT RESEARCH & CHEMICAL CORP.)<br>* Claims 1-9; pages 5,6 *<br>--- | 1 | C 08 F 8/34 |
| A | FR-A-2 382 489 (PHARMACIA FINE CHEMICALS)<br>* Claims 1-8; pages 3,4 *<br>--- | 1 | |
| A | GB-A-2 016 479 (BP CHEMICALS)<br>* Claims 1-13 *<br>--- | 1 | |
| D,A | FR-A-1 551 894 (JAPANESE GEON)<br>* Summary; page 7, column 1; page 8, column 2 *<br>--- | 1 | |
| A | WO-A-8 504 177 (DOW CHEMICAL)<br>* Claims 1-22 *<br>----- | 1 | |
| | | | TECHNICAL FIELDS SEARCHED (Int. Cl.5) |
| | | | C 08 F |

The present search report has been drawn up for all claims

| Place of search | Date of completion of the search | Examiner |
|---|---|---|
| THE HAGUE | 29-06-1990 | PERMENTIER W.A. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)